# EUROPEAN PATENT SPECIFICATION

(11) **EP 2 144 804 B1**
(45) Date of publication and mention of the grant of the patent: **07.07.2010**
(21) Application number: 08751139.0
(22) Date of filing: 06.05.2008
(51) Int. Cl.: B62J 1/00

(54) **SEATING STRUCTURE AND METHOD OF MAKING SAME**
SITZSTRUKTUR UND HERSTELLUNGSVERFAHREN DAFÜR
STRUCTURE DE SIÈGE ET SON PROCÉDÉ DE FABRICATION

(30) Priority: 09.05.2007 IT VI20070134
(43) Date of publication of application: 20.01.2010
(73) Proprietor: SELLE ROYAL S.P.A., 36050 Pozzoleone (Vicenza) (IT)
(72) Inventor: SEGATO, Stefano, I-36100 Vicenza (IT)
(74) Representative: Feltrinelli, Secondo Andrea
(86) International application number: PCT/IB2008/051750
(87) International publication number: WO 2008/139366

(56) References cited:
- WO-A-2004/031025
- US-A1- 2004 004 373

## Description

### Field of invention

The present invention generally finds application in the technical field of sport and leisure accessories, and specifically relates to a seating structure, such as for a bicycle saddle, and a method of making same.

### Background of the invention

Human body seating structures, such as chairs, seats, bicycle saddles and the like, are known to be comprised by a load-bearing structure including a user-supporting shell, which is designed to be attached to a support frame.

The shell has the basic purpose of supporting a seated user while ensuring comfort. It shall also have a particularly low weight to provide easy riding.

According to a prior art solution, shells may be constituted by one or more sheets of composite materials, which are joined together by bonding or molding and later curing and/or polymerization of the resin.

A similar shell type has a substantially uniform resilience throughout its structure and is thus not easily adaptable to the various flexibility requirements associated with the various parts of the cyclist's seat.

While a relatively high rigidity is required for the ischial region, for firm cyclist support, a higher resilience is preferred at the inguinal region of the shell, to allow the latter to accommodate the alternate motion of the adductor muscles.

For this purpose, bicycle saddles have been conceived which have a shell with differently elastic areas, such as two side "wings" or portions, designed to contact the inside thigh areas of the rider, and formed of a composite material with a polymeric matrix, to accommodate the user's anatomy.

A similar solution is known, for example from Italian application V12004A000254, by the applicant hereof.

WO 2004/031025, also by the applicant hereof, discloses a shell like the one disclosed above in which a plurality of radial slots may be formed, possibly by mechanical machining, at each of said wings, to provide corresponding tongues for increasing the flexibility of the shell at its side edges.

Accordingly, there arises the need of protecting such areas to prevent the tongues so formed, that may have sharp edges, from damaging the clothes or even from causing skin injuries.

This purpose has been achieved, for instance, by providing a protective layer made of rubber or another polymeric material with a substantially protective function along the edge of the shell.

The rim may be formed by overmolding, i.e. by introducing a preformed part of the shell having a different elasticity from the rest of the shell, in a mold that has been previously formed with an annular interspace for delimiting the area in which the material is to be injected.

Nonetheless, this prior art solution suffers from certain apparent drawbacks, particularly in that the protective rim so formed is substantially continuous and homogeneous and causes undesired rigidity at the differently elastic areas.

Furthermore, overmolding is not always a cost-effective process, due to the relatively high cost of the mold.

As an alternative, the rim has been formed by co-injection of a polymeric resin at the nose and rear of the shell, so that a higher strength is provided in these areas, while maintaining a softer material at the wings.

One drawback of this prior art solution is that the strength of the individual rim portions might not be well defined at the interface between the different co-injected materials.

As a result, the areas at the contact surfaces might exhibit "hybrid" mechanical properties, which might cause uneven reaction of the shell to the stresses generated during riding, and involve the risk of failure at such areas.

Attention is also drawn to the document US-A-20 040 004 373.

### Summary of the invention

The object of the present invention is to overcome the above drawbacks, by providing a seating structure that is highly efficient and relatively cost-effective.

A particular object is to provide a seating structure having differently deformable areas that is particularly safe for the user and capable of withstanding the stresses generated during riding.

A further object is to provide a seating structure in which the protective rim has substantially uniform mechanical properties at the end areas of each of the portions of which it is composed.

Yet another object is to provide a method of making a seating structure, particularly a bicycle saddle structure, having a protective rim whose different portions exhibit a substantially uniform mechanical strength at their end areas.

Not last object is to provide a method that ensures high cost-effectiveness and efficiency.

These and other objects, as better explained hereafter, are fulfilled by a seating structure, particularly for a bicycle saddle, as defined in claim 1, comprising a load-bearing shell with an elongate front portion, a widened rear portion and at least one differently deformable portion proximate to the outer periphery of the shell, and a substantially annular protective rim proximate to said outer periphery.

The protective rim has a first portion formed of a first material of predetermined elastic rigidity and at least one second portion formed of a second material having a different elastic rigidity from that of said first material and located at said at least one differently deformable part of said shell.

According to the invention, the second portion of the annular edge is separated from said first portion to define at least one substantially transverse end wall facing towards and distinct from at least one respective end wall of said first portion.

Thanks to this particular configuration, the annular protective rim is composed of two or more distinct and separate portions, such that it can have substantially even and defined mechanical properties at the end walls of each of its portions.

In another aspect, the invention relates to a method of making a seating structure as defined in claim 8.

### Brief description of the drawings

Further features and advantages of the invention will be more apparent upon reading of the detailed description of a preferred, non-exclusive embodiment of a saddle structure according to the invention and a method of making same, which are described as a non-limiting example with the help of the annexed drawings, in which:
FIG. 1 is a top view of a seating structure of the invention;
FIG. 2 is a bottom view of the protective rim of a seating structure of the invention;
FIG. 3 is a sectional view of the structure of FIG. 1 as taken along the plane I-I;
FIG. 4 is a sectional view of the structure of FIG. 1 as taken along the plane II-II;
FIG. 5 is a sectional view of the structure of FIG. 1 as taken along the plane III-III;
FIG. 6 is an exploded top view of the structure of FIG. 1, in a first preferred configuration;
FIG. 7 is an exploded top view of the structure of FIG. 1, in a second preferred configuration;
FIG. 8 is a cutaway front view of a mold closed into its working position for carrying out the method of the invention;
Fig. 9 is a top view of a detail of the mold for carrying out the method of the invention;
FIG. 10 is a top view of the mold in its working position, which is shown with an open top for a clearer view of its interior.

### Detailed description of a preferred embodiment

Referring to the above figures, the seating structure of the invention, generally designated by numeral 1, may be a bicycle saddle structure connected in a per se known manner to rails or similar supports, not shown, for attachment to a movable or stationary frame, also not shown. Nonetheless, it will be understood that the seating structure 1 may be configured as a seat, a seating surface of a chair or any other human body support.

The structure 1 may be also associated with an upper cover, not shown but known per se, possibly having a pad or another layer of resilient material for improved seating comfort.

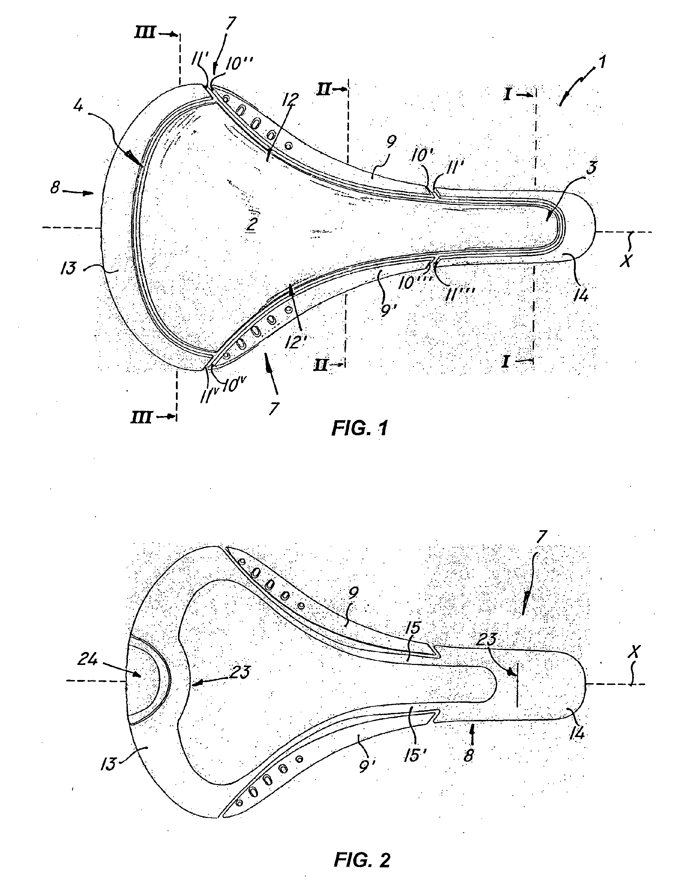

According to the invention, the seating structure, as shown in FIG. 1, comprises a load-bearing shell 2 with an elongate front portion 3 defining a longitudinal axis X, a widened rear portion 4 and at least one differently deformable portion 5, as compared with the rest of the shell 2, which is formed proximate to the outer periphery 6 thereof.

A substantially annular protective rim 7 is provided proximate to the outer periphery 6, which rim has a first portion 8 formed of a first material of predetermined elastic rigidity and at least one second portion 9 formed of a second material having a different elastic rigidity from that of said first material.

According to a peculiar feature of the invention, the second portion 9 of the protective rim 7 is located at the differently deformable portion 5 of the shell 2 and is separated from the first portion 8 to define at least one substantially transverse end wall 10' facing towards and distinct from at least one respective end wall 11' of the first portion 8.

As used herein, the term "differently deformable portion" 5 is meant to designate an area within the surface of the shell 2 that, under a load, has a markedly different deformability than at least another area within the same surface under the same load.

By this arrangement a different resilience may be imparted to the shell 2 at the differently deformed portion 5, as compared with the other areas of the shell 4.

In the arrangements as shown in the annexed figures, which are preferred but do not intend to limit the present invention, the annular protective rim 7 may have a pair of second portions 9, 9' formed in the second base material and are associated with respective differently deformable portions 5, 5' of the shell 2.

Particularly, the differently deformable portions 5, 5' may be formed at the connection areas 12, 12' between the rear portion 4 and the front portion 3 of the shell 2, e.g. in substantially symmetric positions with respect to the longitudinal axis X.

Therefore, the first portion 8 of the annular rim 7 is divided into a rear section 13 and a front section 14, formed of the first base material, and associated with the rear portion 4 and the front portion 3 of the shell 2 respectively, and into two second portions 9, 9' formed of the second base material, which are distinct and separate from each other and from the rest of the protective rim 7.

As shown in FIG. 2, the rear section 13 and the front section 14 may be joined by a pair of specially shaped ribs 15, 15'

According to this preferred configuration, each of the second portions 9, 9' of the protective rim 7 may have a pair of transverse end walls 10', 10" and 10"' and 10^{iv} respectively, facing towards and distinct from respective end walls 11', 11", 11"', 11^{iv} of the front 14 and rear 13 sections of the same annular rim 7.

Thus, both the first 8 and the second portions 9, 9' of the annular rim 7 will have substantially uniform mechanical properties at the respective transverse end walls, 11', 11", 11"', 11^{iv} and 10', 10" 10"', 10^{iv} respectively, to provide a substantially homogeneous response to the stresses generated during riding in these points.

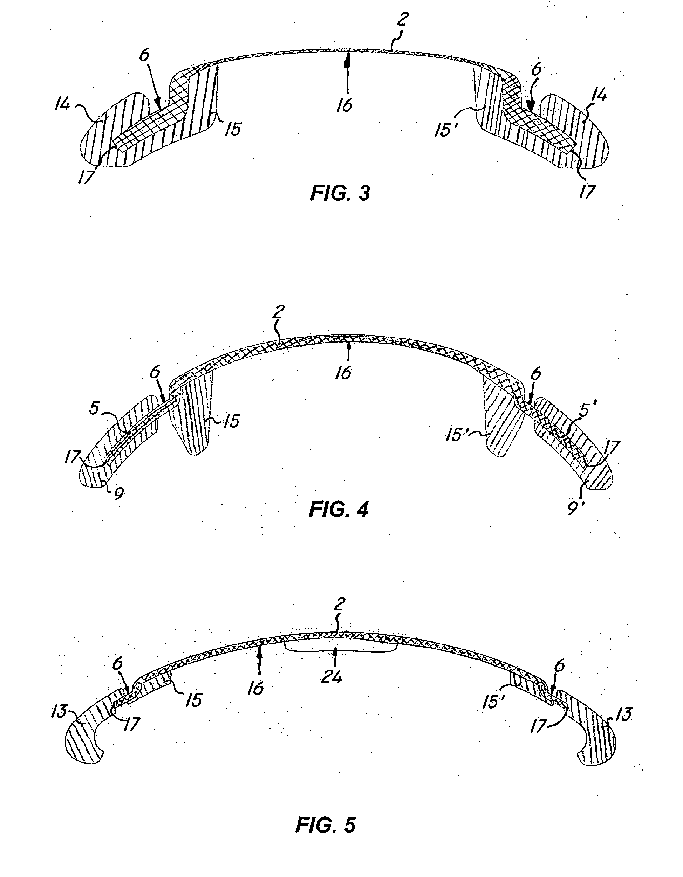

As more clearly shown by the sectional views of FIGS. 3 to 5, the shell 2 and the protective rim 7 may be coupled at a substantially radial recess 17 formed all along the annular extension of the protective rim 7 and designed to receive the outer periphery 6 of the shell 2.

Conveniently, the second base material may have a lower elastic rigidity than the first base material and be selected from the group comprising synthetic and/or natural rubbers having a Shore hardness of about 60 Shore A.

The first base material may be a polyamide resin, such as PA6 or PA12, possibly with fillers.

Thus, the protective rim 7 provides a greater strength at the front 3 and rear 4 portions of the shell 2, which are required to provide an adequate support to the rider's weight, and thus increases the rigidity of the shell 2 in these areas. However, the rim 7 is particularly flexible and light, while ensuring an adequate strength, at the differently deformable portions 5, 5' to allow the latter to accommodate the alternate motion of the cyclist's legs, while protecting them from undesired contact with the shell 2.

Nonetheless, it shall be intended that the second portions 9, 9' of the annular rim 2, whatever their number, are not necessarily formed of the same material, and the front section 14 of the rim 7 may also be formed of a different material from the rear section 13.

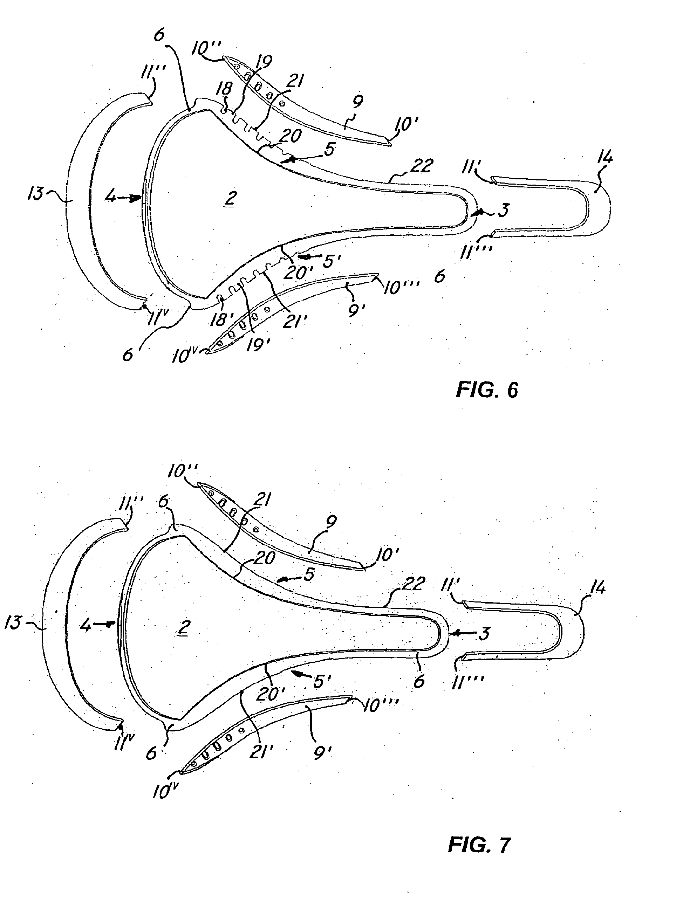

In a first embodiment, as shown in FIG. 6, the differently deformable portions 5, 5' may be as described in application WO 2004/031025, i.e. they may include a plurality of recesses, generally designated by numerals 18 and 18', which are substantially radial and longitudinally staggered, to define a plurality of projections 19, 19'.

The shell 2 may be formed of a thermoplastic composite material composed of a thermoplastic resin matrix with reinforcement fibers, such as carbon, glass, kevlar®, titanium, steel, nitinol®, dynema®, HEPP fibers, natural fibers, such as jute, linen, wool, or the like embedded therein.

In an alternative embodiment, as shown in FIG. 7, the shell 2 may extend continuously at said portions 5, 5', but may have such localized thickness reductions as to generate the required difference in deformability.

In yet another possible configuration, the differently deformable portions 5, 5' might be composed of one or more layers of a composite material comprising a polymeric matrix, such as a fiber membrane embedded in an elastomeric matrix, as disclosed in the Italian Application VI2004A000254.

In each of the possible configurations as described above, which shall nonetheless not be intended to limit the present invention, the differently deformable portions 5, 5' may be so shaped as to define a substantially curvilinear inner profile 20, 20' and an outer profile 21, 21' substantially coincident with a section of the outer edge 22 of the shell 2.

Advantageously, the annular rim 7 may comprise rails attachment means 23 and its rear section 13 may also include snap means 24 for attachment of an accessory, such as a bag, not shown.

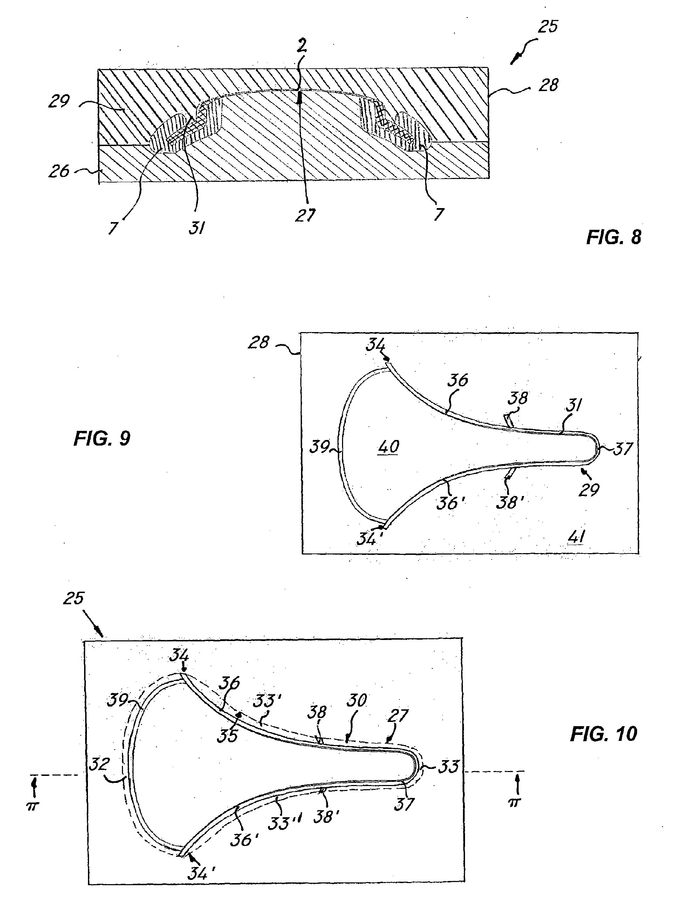

FIGS. 8 to 10 schematically show a mold 25 for making a saddle structure 1 as described above according to the method of the invention.

This embodiment includes a first step of providing a substantially sheet-like load bearing shell 2 as described above and a step of providing a mold 25 comprising a female member 26 as shown in FIG. 8, with a bottom wall 27 having a shape substantially mating the underside 16 of the shell 2.

The mold 25 further has a male member 28, as shown in FIG. 9, with a pressing part 29 adapted to cooperate with the bottom wall 27 of the female member 26 to define a substantially annular interspace 30, as shown in FIG. 10.

The shell 2 is introduced in the female member 26 with its outer periphery 6 at least partly held within the annular interspace 30 so formed.

According to a peculiar feature of the invention, the pressing part 29 of the male member 28 of the mold 25 has at least one first partition wall 31 which is suitably shaped to define the annular interspace 30 into at least one first 32 and at least one second 33 injection chambers.

After the steps of introducing the shell 2 in the mold 25 and of closing the latter, the method further includes a step of forming a substantially annular protective rim 7 on the peripheral area 6 of the shell 2 by introduction of a first base material in the first chamber 32 and a second base material in the second chamber 33.

Preferably, the step of forming the protective rim 7 may be carried out by injecting the first base material into the first chamber 32 and, preferably but not necessarily at the same time, by injecting the second base material into the second chamber 33.

Preferably, the first partition wall 31 may have end portions 34, 34' that, with the mold 25 closed into the working position, extend to the outer edge 35 of the annular interspace 30, outlined by a dashed line in FIG. 10.

If the preformed shell 2 has a pair of differently deformable portions 5, 5' symmetrical with respect to the longitudinal axis X, the first partition wall 31 may be so shaped as to extend, with the mold 25 closed into the working position, parallel and inwards relative to the outer edge 22 of the shell 2 along the connection areas 12, 12' connecting the front portion 3 to the rear portion 4 and along the front portion 3 of the shell 2.

Particularly, the first partition wall 31 may have end sections 36, 36' with an outer profile substantially similar to that of the inner profile 20, 20' of the corresponding differently deformable portion 5, 5' which may be joined together by a substantially U-shaped front section 37 designed to be associated, with the mold 25 closed into the working position, with the front portion 3 of the shell 2.

Also, the pressing part 29 of the male member 28 may include a pair of substantially transverse dividing webs 38, 38', symmetrical with respect to the center plane π of the male member 28 to be arranged proximate to the front 3 of the shell 2 symmetrical with respect to the longitudinal axis X thereof.

The dividing webs 38, 38' so arranged divide the second injection chamber 33 into three distinct portions 33, 33', 33", which are designed to receive the outer periphery 6 of the shell 2, respectively at the front 3 and at the corresponding differently deformable portions 5, 5'.

The interspace 30 is so divided into a pair of second lateral injection chambers 33', 33" for injection of the second base material, and a pair of first chambers 32, 33, which are designed to partially receive the front 3 and the back 4 respectively of a shell 2, for injection of the first base material.

Also, the male member 28 may have a second partition 39 which is joined to the first partition 31 to define one of the first injection chambers 32.

Finally, the portion 40 of the bottom wall 41 of the male member 28, enclosed by the first 31 and the second partition 30 may have a shape substantially mating that of the bottom wall 27 of the female member 26, allowing use of the mold 25 also for forming the shell 2.

The above disclosure clearly shows that the invention fulfills the intended objects and particularly meets the requirement of providing a seating structure, particularly a bicycle saddle, that can accommodate the various stresses generated by a rider's body and that also has a high resistance to stresses, thereby providing high safety and comfort.

Thanks to the particular configuration of the mold 25, the portions 9, 9', 13, 14 that form the protective rim 7 have a well defined strength and substantially uniform mechanical properties at their respective ends.

The structure and method of the invention are susceptible to a number of changes and variants, within the inventive concept disclosed in the annexed claims. All the details thereof may be replaced by other technically equivalent parts, and the materials may vary depending on different needs, without departure from the scope of the invention.

While the structure and method have been described with particular reference to the accompanying figures, the numerals referred to in the disclosure and claims are only used for the sake of a better intelligibility of the invention and shall not be intended to limit the claimed scope in any manner.

## Claims

1. A seating structure, particularly for a bicycle saddle, comprising:
- a load-bearing shell (2) with an elongate front portion (3) defining a longitudinal axis (X), a widened rear portion (4) and at least one differently deformable portion (5) at the outer periphery (6) of the shell (2);
- a substantially annular protective rim (7) proximate to said outer periphery (6), said protective rim (7) having a first portion (8) formed of a first material of predetermined elastic rigidity and at least one second portion (9) formed of a second base material of different elastic rigidity from that of said first material; **characterized in that** said at least one second portion (9) is located at said at least one differently deformable portion (5) of said shell (2) and is separated from said first portion (8) to define at least one substantially transverse end wall (10) facing towards and distinct from at least one respective end wall (11) of said first portion (8).

2. Seating structure as claimed in claim 1, **characterized in that** said shell (2) comprises at least one pair of said differently deformable portions (5, 5'), said protective rim (7) comprising at least one pair of said second portions (9, 9') formed of said second base material, associated with respective differently deformable portions (5, 5').

3. Seating structure as claimed in claim 2, **characterized in that** each of said second portions (9, 9') of said protective rim (7) has a pair of transverse end walls (10', 10", 10"', 10^{iv}) facing towards and distinct from respective end walls (11', 11", 11"', 11^{iv}) of said first portion (9, 9') of said protective rim (7).

4. Seating structure as claimed in one or more of the preceding claims, **characterized in that** said protective rim (7) has a substantially radial recess (17) all along its annular extension, which is designed to receive said outer periphery (6) of said shell (2).

5. Seating structure as claimed in one or more of the preceding claims, **characterized in that** said first portion (8) of said protective rim (7) comprises a rear section (14) and a front section (13) secured respectively to said rear portion (4) and said front portion (3) of said shell (2) and joined together by a pair of specially shaped ribs (15, 15') located below the underside (16) of said shell (2).

6. Seating structure as claimed in one or more of the preceding claims, **characterized in that** said first base material is selected from the group comprising thermoplastic resins and said second base material is selected from the group comprising synthetic and/or natural rubbers.

7. Seating structure as claimed in one or more of the preceding claims, **characterized in that** said shell (2) has a plurality of substantially radial and longitudinally staggered recesses (18, 18') at each of said differently deformable portions (5, 5'), to define a plurality of projections (19, 19'),

8. A method of making a seating structure according to claim 1, particularly for a bicycle saddle, comprising the steps of:
- providing a preformed load-bearing shell (2) with an underside (16) designed for attachment to a movable or stationary frame, a widened rear portion (4), an elongate front portion (3) defining a longitudinal axis (X), and at least one differently deformable portion, having different deformability as compared with the rest of said shell (2), which is formed at the outer periphery (6) of the latter,
- providing a mold (25) comprising a female member (26) with a bottom wall (27) having a substantially complementary shape with respect to the underside (16) of said shell (2) and a male member (28) with a pressing part (29) adapted to cooperate with said bottom wall (27) of said female member (26) to define a substantially annular interspace (30),
- introducing said preformed shell (2) in said mold (25) with said outer periphery (6) at least partially received in said annular interspace (30),
wherein said pressing part (29) of said male member (28) has at least one first partition (31) appropriately shaped to divide said annular interspace (30) into at least one first (32) and at least one second (33) chambers, said at least one differently deformable portion (5) of said shell (2) being at least partially receivable in said at least one second chamber (33), and
wherein a step is provided of forming a substantially annular protective rim (7) on said periphery (6) of said shell (2) by introducing a first base material in said at least one first chamber (32) and a second base material in said at least one second chamber (33).

9. Method as claimed in claim 8, wherein said forming step is carried out by injecting said first and said second base materials in said first (32) and said at least one second (33) chambers.

10. Method as claimed in claim 9, wherein said injection steps are substantially simultaneous.

11. Method as claimed in one or more of the preceding claims, **characterized in that** a first partition wall (31) has end sections (36, 36') with end portions (34, 34') that, with the mold (25) closed, extend to the outer edge (35) of said interspace (30).

12. Method as claimed in claim 11, wherein said end sections (36, 36') are joined by a substantially U-shaped front section (37), with said mold (25) closed, to said front portion (3) of said shell (2).

13. Method as claimed in one or more of the preceding claims, wherein said pressing part (29) of said male member (28) has a pair of substantially transverse dividing walls (38, 38'), adapted to be arranged proximate to said front (3) of said shell (2) symmetrical with respect to said longitudinal axis (X) to divide said second injection chamber (33) into three portions (33, 33', 33"), which are designed to receive said outer periphery (6) of said shell (2) at said front portion (3) and corresponding differently deformable portions (5, 5').

## Patentansprüche

1. Sitzkonstruktion, insbesondere für einen Fahrradsattel, umfassend:
- eine Lasttragschale (2) mit einem länglichen vorderen Abschnitt (3), der eine Längsachse (X) definiert, einem verbreiterten hinteren Abschnitt (4) und mindestens einem unterschiedlich verformbaren Abschnitt (5) am Außenumfang (6) der Schale (2);
- einen im Wesentlichen ringförmigen Schutzrand (7) in der Nähe des Außenumfangs (6), wobei der Schutzrand (7) einen aus einem ersten Material mit einer vorbestimmten Federsteifigkeit ausgebildeten ersten Abschnitt (8) und mindestens einen zweiten Abschnitt (9) aufweist, der aus einem zweiten Grundmaterial mit einer von der des ersten Materials verschiedenen Federsteifigkeit ausgebildet ist;
**dadurch gekennzeichnet, dass** der mindestens eine zweite Abschnitt (9) bei dem mindestens einen unterschiedlich verformbaren Abschnitt (5) der Schale (2) angeordnet und vom ersten Abschnitt (8) getrennt ist, um mindestens eine im Wesentlichen querlaufende Endwand (10) zu definieren, die mindestens einer entsprechenden Endwand (11) des ersten Abschnitts (8) zugewandt und von ihr verschieden ist.

2. Sitzkonstruktion nach Anspruch 1, **dadurch gekennzeichnet, dass** die Schale (2) mindestens ein Paar der unterschiedlich verformbaren Abschnitte (5, 5') umfasst, wobei der Schutzrand (7) mindestens ein Paar der aus dem zweiten Grundmaterial ausgebildeten zweiten Abschnitte (9, 9') umfasst, die mit entsprechenden unterschiedlich verformbaren Abschnitten (5, 5') verbunden sind.

3. Sitzkonstruktion nach Anspruch 2, **dadurch gekennzeichnet, dass** jeder der zweiten Abschnitte (9, 9') des Schutzrands (7) ein Paar querlaufender Endwände (10', 10", 10"', 10^{iv}) aufweist, die entsprechenden Endwänden (11', 11", 11 "', 11^{iv}) des ersten Abschnitts (9, 9') des Schutzrands (7) zugewandt und von ihnen verschieden sind.

4. Sitzkonstruktion nach einem oder mehreren der vorherigen Ansprüche, **dadurch gekennzeichnet, dass** der Schutzrand (7) eine im Wesentlichen radiale Aussparung (17) entlang seinem ganzen ringförmigen Verlauf aufweist, die dafür gestaltet ist, den Außenumfang (6) der Schale (2) aufzunehmen.

5. Sitzkonstruktion nach einem oder mehreren der vorherigen Ansprüche, **dadurch gekennzeichnet, dass** der erste Abschnitt (8) des Schutzrands (7) einen hinteren Bereich (14) und einen vorderen Bereich (13) umfasst, die am hinteren Abschnitt (4) beziehungsweise am vorderen Abschnitt (3) der Schale (2) befestigt und durch ein Paar besonders geformter Rippen (15, 15') miteinander verbunden sind, die sich unterhalb der Unterseite (16) der Schale (2) befinden.

6. Sitzkonstruktion nach einem oder mehreren der vorherigen Ansprüche, **dadurch gekennzeichnet, dass** das erste Grundmaterial aus der thermoplastische Harze umfassenden Gruppe ausgewählt ist und das zweite Grundmaterial aus der Synthese- und/oder Naturkautschuke umfassenden Gruppe ausgewählt ist.

7. Sitzkonstruktion nach einem oder mehreren der vorherigen Ansprüche, **dadurch gekennzeichnet, dass** die Schale (2) eine Vielzahl von im Wesentlichen radialen und in Längsrichtung gestaffelten Aussparungen (18, 18') bei jedem der unterschiedlich verformbaren Abschnitte (5, 5') aufweist, um eine Vielzahl von Ansätzen (19, 19') zu definieren.

8. Verfahren zur Herstellung einer Sitzkonstruktion nach Anspruch 1, insbesondere für einen Fahrradsattel, das die folgenden Schritte umfasst:
- Bereitstellen einer vorgeformten Lasttragschale (2) mit einer zum Befestigen an einem beweglichen oder unbeweglichen Rahmen gestalteten Unterseite (16), einem verbreiterten hinteren Abschnitt (4), einem länglichen vorderen Abschnitt (3), der eine Längsachse (X) definiert, und mindestens einem unterschiedlich verformbaren Abschnitt mit einer gegenüber der übrigen Schale (2) verschiedenen Verformbarkeit, der am Außenumfang (6) der Letzteren ausgebildet ist;
- Bereitstellen einer Gießform (25), die ein Matrizenglied (26) mit einer Bodenwand (27), die eine im Wesentlichen zur Unterseite (16) der Schale (2) komplementäre Form aufweist, und ein Patrizenglied (28) mit einem Presselement (29) umfasst, das geeignet ist, mit der Bodenwand (27) des Matrizenglieds (26) zusammenzuarbeiten, um einen im Wesentlichen ringförmigen Zwischenraum (30) zu definieren;
- Einführen der vorgeformten Schale (2) in die Gießform (25), wobei der Außenumfang (6) zumindest teilweise vom ringförmigen Zwischenraum (30) aufgenommen wird;
wobei das Presselement (29) des Patrizenglieds (28) mindestens einen ersten Teilbereich (31) aufweist, der derart passend geformt ist, dass er den ringförmigen Zwischenraum (30) in mindestens eine erste (32) und mindestens eine zweite (33) Kammer aufteilt, wobei der mindestens eine unterschiedlich verformbare Abschnitt (5) der Schale (2) zumindest teilweise von der mindestens einen zweiten Kammer (33) aufgenommen werden kann, und
wobei ein Schritt des Ausbildens eines im Wesentlichen ringförmigen Schutzrands (7) auf dem besagten Umfang (6) der Schale (2) durch Einführen eines ersten Grundmaterials in die mindestens eine erste Kammer (32) und eines zweiten Grundmaterials in die mindestens eine zweite Kammer (33) vorgesehen ist.

9. Verfahren nach Anspruch 8, bei dem der Schritt des Ausbildens durch Einspritzen der ersten und zweiten Grundmaterialien in die ersten (32) und zweiten (33) Kammern ausgeführt wird.

10. Verfahren nach Anspruch 9, bei dem die Schritte des Einspritzens im Wesentlichen parallel ablaufen.

11. Verfahren nach einem oder mehreren der vorherigen Ansprüche, **dadurch gekennzeichnet, dass** eine erste Scheidewand (31) Endbereiche (36, 36') mit Endabschnitten (34, 34') aufweist, die bei geschlossener Gießform (25) bis zum Außenrand (35) des Zwischenraums (30) reichen.

12. Verfahren nach Anspruch 11, bei dem die Endbereiche (36, 36') bei geschlossener Gießform (25) durch einen im Wesentlichen U-förmigen vorderen Bereich (37) mit dem vorderen Abschnitt (3) der Schale (2) verbunden sind.

13. Verfahren nach einem oder mehreren der vorherigen Ansprüche, bei dem das Presselement (29) des Patrizenglieds (28) ein Paar von im Wesentlichen querlaufenden Trennwänden (38, 38') aufweist, die geeignet sind, nahe der Vorderseite (3) der Schale (2) symmetrisch zur Längsachse (X) angeordnet zu werden, um die zweite Gießkammer (33) in drei Abschnitte (33, 33', 33") zu unterteilen, die gestaltet sind, um den Außenumfang (6) der Schale (2) im vorderen Abschnitt (3) und entsprechende unterschiedlich verformbare Abschnitte (5, 5') aufzunehmen.

## Revendications

1. Structure de siège, en particulier pour une selle de bicyclette, comprenant :
- une enveloppe porteuse (2) avec une partie avant allongée (3) définissant un axe longitudinal (X), une partie arrière élargie (4) et au moins une portion différemment déformable (5) à la périphérie extérieure (6) de l'enveloppe (2) ;
- un rebord de protection sensiblement annulaire (7) à proximité de ladite périphérie extérieure (6), ledit rebord de protection (7) ayant une première portion (8) constituée par un premier matériau de rigidité élastique prédéterminée et au moins une deuxième portion (9) constituée par un deuxième matériau de base de rigidité élastique différente de celui dudit premier matériau ;
**caractérisée en ce que** ladite au moins une deuxième portion (9) est située au niveau de ladite au moins une portion différemment déformable (5) de ladite enveloppe (2) et est séparée de ladite première portion (8) pour définir au moins une paroi terminale sensiblement transversale (10) orientée vers et séparée d'au moins une paroi terminale respective (11) de ladite première portion (8).

2. Structure de siège selon la revendication 1, **caractérisée en ce que** ladite enveloppe (2) comprend au moins une paire desdites portions différemment déformables (5, 5'), ledit rebord de protection (7) comprenant au moins une paire desdites deuxièmes portions (9, 9') formées dudit deuxième matériau de base, associées avec des portions différemment déformables (5, 5') respectives.

3. Structure de siège selon la revendication 2, **caractérisée en ce que** chacune desdites deuxièmes portions (9, 9') dudit rebord de protection (7) comprend une paire de parois terminales transversales (10', 10", 10"', 10^{iv}) orientées vers et séparées de parois terminales respectives (11', 11", 11"', 11^{iv}) de ladite première portion (9, 9') dudit rebord de protection (7).

4. Structure de siège selon une ou plusieurs des revendications précédentes, **caractérisée en ce que** ledit rebord de protection (7) comporte un évidement sensiblement radial (17) tout le long de son extension annulaire, qui est conçu pour recevoir ladite périphérie extérieure (6) de ladite enveloppe (2).

5. Structure de siège selon une ou plusieurs des revendications précédentes, **caractérisée en ce que** ladite première portion (8) dudit rebord de protection (7) comprend une section arrière (14) et une section avant (13) fixées respectivement à ladite partie arrière (4) et ladite partie avant (3) de ladite enveloppe (2) et unies l'une à l'autre par une paire de nervures spécialement profilées (15, 15') situées sous les côté inférieur (16) de ladite enveloppe (2).

6. Structure de siège selon une ou plusieurs des revendications précédentes, **caractérisée en ce que** ledit premier matériau de base est sélectionné parmi le groupe comprenant des résines thermoplastiques et ledit deuxième matériau de base est sélectionné parmi le groupe comprenant des caoutchoucs synthétiques et/ou naturels.

7. Structure de siège selon une ou plusieurs des revendications précédentes, **caractérisée en ce que** ladite enveloppe (2) comporte une pluralité d'évidements sensiblement radiaux et longitudinaux en gradins (18, 18') au niveau de chacune desdites portions différemment déformables (5, 5'), pour définir une pluralité de saillies (19, 19').

8. Un procédé de fabrication d'une structure de siège selon la revendication 1, en particulier pour une selle de bicyclette, comprenant les étapes consistant à :
- prédisposer une enveloppe porteuse préformée (2) avec un côté inférieur (16) conçu pour la fixation à un châssis mobile ou fixe, une partie arrière élargie (4), une partie avant allongée (3) définissant un axe longitudinal (X), et au moins une portion différemment déformable, ayant une déformabilité différente par rapport au reste de ladite enveloppe (2), qui est formée à la périphérie extérieure (6) de celle-ci,
- prédisposer un moule (25) comprenant un élément femelle (26) avec une paroi de fond (27) ayant un profil sensiblement complémentaire par rapport au côté inférieur (16) de ladite enveloppe (2) et un élément mâle (28) avec une partie à pression (29) adaptée pour coopérer avec ladite paroi de fond (27) dudit élément femelle (26) pour définir un espace intermédiaire sensiblement annulaire (30),
- introduire ladite enveloppe préformée (2) dans ledit moule (25) avec ladite périphérie extérieure (6) reçue au moins partiellement dans ledit espace intermédiaire annulaire (30),
dans lequel ladite partie de pression (29) dudit élément mâle (28) a au moins une première cloison (31) profilée de manière appropriée pour diviser ledit espace intermédiaire annulaire (30) en au moins une première (32) et au moins une deuxième (33) chambres, ladite au moins une portion différemment déformable (5) de ladite enveloppe (2) étant au moins partiellement logeable dans ladite au moins une deuxième chambre (33), et
dans lequel une étape est prévue pour former un rebord de protection sensiblement annulaire (7) à ladite périphérie (6) de ladite enveloppe (2) en introduisant un premier matériau de base dans ladite au moins une première chambre (32) et un deuxième matériau de base dans ladite au moins une deuxième chambre (33).

9. Procédé selon la revendication 8, dans lequel ladite étape de formation est exécutée en injectant ledit premier et ledit deuxième matériaux de base dans ladite première (32) et ladite au moins une deuxième (33) chambres.

10. Procédé selon la revendication 9, dans lequel lesdites étapes d'injection sont sensiblement simultanées.

11. Procédé selon une ou plusieurs des revendications précédentes, **caractérisé en ce qu'**une première paroi de division (31) a des sections d'extrémité (36, 36') avec des portions terminales (34, 34') qui, avec le moule (25) fermé, s'étendent jusqu'au bord extérieur (35) dudit espace intermédiaire (30).

12. Procédé selon la revendication 11, dans lequel lesdites sections d'extrémité (36, 36') sont unies par une section antérieure sensiblement en forme de U (37), avec ledit moule (25) fermé, à ladite partie avant (3) de ladite enveloppe (2).

13. Procédé selon une ou plusieurs des revendications précédentes, dans lequel ladite partie à pression (29) dudit élément mâle (28) comporte une paire de parois de division sensiblement transversales (38, 38'), adaptées pour être disposées à proximité de ladite partie avant (3) de ladite enveloppe (2) symétrique par rapport audit axe longitudinal (X) pour diviser ladite deuxième chambre d'injection (33) en trois parties (33, 33', 33"), qui sont conçues pour recevoir ladite périphérie extérieure (6) de ladite enveloppe (2) au niveau de ladite partie avant (3) et de portions différemment déformables (5, 5') correspondantes.
